# EUROPEAN PATENT APPLICATION

(11) **EP 1 964 895 A1**
(43) Date of publication of application: **03.09.2008**
(21) Application number: 08100384.0
(22) Date of filing: 11.01.2008
(51) Int. Cl.: C09D 11/00, H04N 1/60

(54) **Ink set for image recording apparatus**

(30) Priority: 28.02.2007 KR 20070020525
(71) Applicant: Samsung Electronics Co., Ltd., Suwon-si, Gyeonggi-Do (KR)
(72) Inventor: Roh, Hee-jung, Gyeonggi-do (KR); Park, Heung-sup, Gyeonggi-do (KR)
(74) Representative: Killin, Stephen James

(57) **Abstract**

An ink set includes at least one kind of color ink, wherein each ink includes a coloring agent, an organic solvent, and water. When the at least one kind of color ink has a color region shifted from a standard color region in the CIE-La*b* color coordinate system, a color region of ink, which is a complementary color of the at least one kind of color of ink having the shifted color region in the color coordinate system, is controlled to widen a color gamut so that clear and various color images are produced.

## Description

The present invention relates to an ink set for an image recording apparatus having a large color gamut in the color coordinate system. More particularly, the invention relates to an ink set for an image recording apparatus having a large color gamut, where the ink set has at least an ink having a color range shifted in the color coordinate system with respect to a standard color and providing an ink having a complementary color of at least one ink having a shifted color range in the color coordinate system.

Conventionally, a coloring agent refers to a material that selectively absorbs or reflects visible light and provides a unique color. The coloring agent is classified as a dye, a pigment, or a surface-modified self-dispersion pigment.

A dye refers to a coloring agent that dyes a material to be dyed, such as fiber, leather, fur, or paper, using a given method so that the dyed material has a high solar light fastness, cleaning fastness and rubbing fastness. The pigment and the surface-modified self-dispersion pigment refer to micro particles having a coloring agent attached to the surface of the material to be dyed using a physical method, such as bonding, to provide a unique color. The surface of the material is not directly dyed. A color provided by the coloring agent, such as a dye or a pigment, is determined by the wavelength of visible light selectively reflected or transmitted by particles of the material to be dyed in the visible light range of 3,000-7,000Å. Conventionally, when high solar light fastness is required, that is, for outdoor advertising or a plotter, a pigment ink is usually used as the coloring agent. On the other hand, a photo printer, which requires a level of photo quality as high as a conventional analogue picture, a dye is usually used as the coloring agent.

Conventionally, inkjet printing produces a color using a 3-color ink set that includes Cyan, Magenta, and Yellow, or a 4-color ink set that includes Cyan, Magenta, Yellow, and Black. In theory, the entire range of colors can be realized using the 3-color ink set of Cyan, Magenta, and Yellow. However, practical dyes have color regions shifted from the standard color regions of Cyan, Magenta, and Yellow in the color coordinate system, and in addition, there are various technical problems, such as a storage stability or reactivity within a cartridge. As a result, the kind and concentration of a coloring agent used is limited and thus, the range of colors that can be produced is narrowed.

In order to address such problems as described-above, an industrial printer or a photo printer is additionally equipped with red, blue, green, and orange cartridges, in addition to a cyan, magenta, and yellow cartridge, to expand the color gamut or color range. Since additional cartridges are used to expand the color gamut, the ink set is expensive, bulky, and unstable, the nozzle of the cartridge becomes clogged, and color leaking occurs.

As such, there is a six-color ink set having, in addition to cyan, magenta, and yellow, photo magenta and photo cyan having the same color type and lower density. For example, U.S. Patents Nos. 6,079,824 and 6,299,285 disclose a printing apparatus and method for printing with a plurality of kinds of the same color type inks having a different density from each other to improve the color reproduction. Also, U.S. Patent Application No. 2003/0071883 discloses a printer including pigment inks which uses the same color type inks having the same or similar viscosity and different concentrations to obtain various color reproductions.

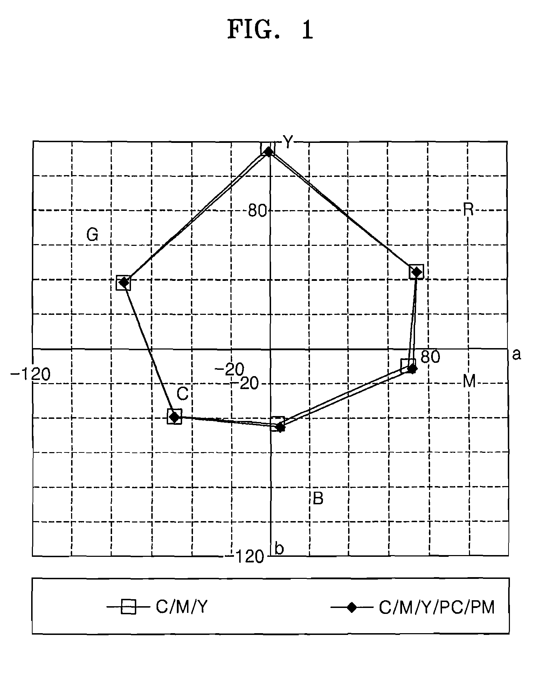

FIG. 1 illustrates a color coordinate system obtained using photo Cyan and photo Magenta having the same color type and low concentration. In this case, smooth gradation or low-concentration colors can be finely illustrated, so that a clearer and much more natural photo or picture of skin or a clear sky can be obtained as compared to when the three-color ink set of cyan, magenta and yellow is used. In this case, however, the color gamut is not expanded and thereby is not able to produce various colors close to its original image.

The color gamut can be further expanded by using a secondary color ink cartridge (red, green, blue) or a surrounding mixed color ink cartridge (violet or brown) together with the ink cartridges described above.

Even when the secondary color or surrounding mixed color ink cartridges is used, the performance and the stability of each ink cartridge must be maintained constant in order to prevent a change in physical properties of ink under various environmental conditions and layer separations. In addition, even when inks leak at the surface of the nozzle, clogging of the nozzle or any problems related thereto must not occur. As such, printers use a maintenance algorithm involving spitting, wiping, and purging or suction in order to obtain long storage stability. Therefore, if the number of ink cartridges used increases, the maintenance algorithm used by the printers is complex and must be used many times as compared to a case in which the four-color or six-color ink set is used. Furthermore, the cleaning of the nozzle, for preventing the nozzle from clogging or a weak nozzle phenomenon of a color ink from occurring, must be performed a few times or tens of times when the number of inks increase as compared to a case in which the four-color or six-color ink set is used. As a result, the amount of wasted ink is substantially increased.

The present invention provides an ink set, which enables the reproduction of a low-concentration continuous color and various color types without use of a secondary color or a surrounding mixed color, and has a larger color gamut or color range so that colors can be balanced with each other.

According to a first aspect of the present invention, an ink set includes a first Cyan ink, a first Magenta ink, and a first Yellow ink, wherein at least one of said first inks selected from the first Cyan ink, the first Magenta ink, and the first Yellow ink has a color region shifted from a standard color region in a color coordinate system, the ink set further including: at least one second ink selected from a second Cyan ink, a second Magenta ink, and a second Yellow ink, which is a complementary color of the first ink having the shifted color region, and has a color region shifted from a standard color region in the same direction as the ink having the shifted color region with respect to the color coordinate system.

When the first Cyan ink has the θ value (Greenish Cyan value) of 205° to 220° in the color coordinate system, the ink set may further includes at least one kind of ink having θ value (Bluish Magenta value) of 340.3° to 355.3° as a second Magenta ink where θ denotes an angle between a straight line connecting a coordinate(0,0) of a*b* coordinates to a plotted spot and an a* plus axis in a counter-clockwise direction in a Lab color coordinate system.

When the first Cyan ink has the θ value (Bluish Cyan value) of 230° to 245° in the color coordinate system, the ink set may further include at least one kind of ink having θ value (Greenish Yellow value) of 92° to 107° as a second Yellow ink. When the first Magenta ink has the θ value (Bluish Magenta value) of 340.3° to 355.3° in the color coordinate system, the ink set may further include at least one kind of ink having the θ value (Reddish Yellow value) of 67° to 82° as a second Yellow ink.

When the first Magenta ink has the θ value (Reddish Magenta value of 5.3° to 20.3° in the color coordinate system, the ink set may further include an at least one kind of ink having the θ value (Bluish Cyan value) of 230° to 245° as a second cyan ink. When the first Yellow ink has the θ value (Greenish yellow value) of 92° to 107° in the color coordinate system, the ink set may further include at least one kind of ink having the θ value (Reddish Magenta value) of 5.3° to 20.3° as a second Magenta ink.

When the first Yellow ink has the θ value (Reddish yellow value) of 67° to 82° in the color coordinate system, the ink set may further include at least one kind of ink having the θ value (Greenish Cyan value) of 205° to 220° as a second cyan ink.
The ink set according to the present invention enables various gradation expressions and three-dimensional expression, and has a larger color gamut so that realistic images can be obtained.

According to a second aspect of the present invention, there is provided an ink set comprising a first cyan ink, a first magenta ink, and a first yellow ink, wherein at least one of said first inks selected from the group consisting of the first cyan ink, the first magenta ink, and the first yellow ink has a color region shifted from a standard color region in a color coordinate system, the ink set further comprising: at least one second ink selected from the group consisting of a second cyan ink, a second magenta ink, and a second yellow ink, which is a complementary color to the shifted colour region of the selected first ink, and where the second ink has a color region shifted from the standard color region of the selected second ink in the same direction in the color coordinate system as the selected first ink having the shifted color region. In this aspect of the invention, the selected second ink preferably has a shifted color region that compensates for the deviation from the standard color region of the shifted color region of the first selected ink. Preferred embodiments of the invention in its second aspect include the embodiments described above in relation to the invention in its first aspect.

According to a third aspect of the present invention, there is provided apparatus comprising an ink set according to the invention in its first aspect.

According to a fourth aspect of the present invention, there is provided a method of improving the colour gamut of an ink set comprising a first ink having a color region shifted region in a color coordinate system with respect to a standard color, said method comprising including in the ink set a second ink that is a complementary color to the shifted color region of the first ink and that has a color region shifted from the standard color region of the second ink in the same direction in the color coordinate system as the first ink having the shifted color region.

Further preferred embodiments of the present invention in any of its various aspects are as described below or as defined in the sub-claims.

The above and other features and advantages of the present invention will become more apparent by reference to the follow detailed description of certain exemplary embodiments thereof with reference to the attached drawings in which:
FIG. 1 is a graph illustrating a color gamut of a conventional ink set;
FIG. 2 is a graph illustrating a color gamut of an ink set according to an embodiment of the present invention; and
FIG. 3 is a graph illustrating a color gamut of an ink set according to another embodiment of the present invention.

The present invention will now be described more fully with reference to the accompanying drawings, in which exemplary embodiments of the invention are shown.

An ink set according to an embodiment of the present invention includes a first cyan ink, a first magenta ink, and a first yellow ink, (group A) wherein at least one kind of ink selected from the group consisting of the first cyan ink, the first magenta ink, and the first yellow ink has a color region shifted from a standard color region in a Lab color coordinate system. The ink set according to an embodiment of the present invention further includes at least one kind of ink selected from the group consisting of a second cyan ink, a second magenta ink, and a second yellow ink (group B), which is a complementary color of the ink having the shifted color region, and has a color region shifted from the standard color region in the same direction as the ink having the shifted color region.

The expression, "shifted from the standard color region in the same direction", indicates that when a first ink has a color region shifted from a standard color region in a counter-clockwise direction in the color coordinate system, a second ink, which is a complementary color of the first ink, also has a color region shifted from the standard color region in a counter-clockwise direction. On the other hand, when a first ink has a color region shifted from a standard color region in a clockwise direction in the color coordinate system, a second ink, which is a complementary color of the first ink, also has a color region shifted from the standard color region in a clockwise direction.

In the color coordinate system, the standard coordinates of cyan, magenta and yellow are about 224.86°, 264.49°, and 86.83°, respectively, each of which is an angle between a straight line connecting a coordinate (0,0) of a*b* coordinates to a plotted point in the Lab color coordinate system and an a* plus axis in a counter-clockwise direction. In the present application, θ denotes angle.

A conventional ink set includes a first Cyan ink; a first Magenta ink; a first Yellow ink; and a second Cyan ink, a second Magenta ink, and/or a second Yellow ink having the same color type as but lower concentration than the first Cyan ink, the first Magenta ink, and the first Yellow ink. By further using at least one of the second cyan ink, the second magenta ink and the second yellow ink, smooth images can be obtained. However, the color gamut or range is not widened, and thus, it is difficult to obtain a clear image. Conventionally, a commercially available dye does not have cyan, magenta, and yellow having standard color regions in the Lab color coordinate system, and therefore, the color gamut is decreased by using other-color images together to compensate for the color difference. In the present embodiment, however, the color gamut is rather decreased. However, according to the present invention, even when a dye that is used has a color region shifted from the standard color region, the color gamut of red, blue, and green can be increased by properly combining an ink that is a complementary color of the used dye. The term "color coordinate system" is as normally understood in the art. The color coordinate system is sometimes referred to as the red-blue-green coordinate system or the Cartesian coordinate system.

Specifically, the cyan ink can produce blue together with an adjacent magenta ink. When the first cyan ink is shifted from the standard color region in a green direction, the color gamut of blue is decreased. As a result, in order to compensate for the decrease of the color gamut of blue, a magenta ink which is shifted to blue is used as the second magenta ink. That is, when the θ value (Greenish Cyan value) of the first cyan ink in the color coordinate system is in the range of 205° to 220°, at least one kind of ink, which has a θ value (Bluish Magenta value) of 340.3° to 355.3°, is further included as the second magenta ink.

The cyan ink can also produce green together with an adjacent yellow ink. When the first cyan ink is shifted from the standard color region in a blue direction, the color gamut of green is decreased. As a result, in order to compensate for the decrease of the color gamut of green, a yellow ink, which is shifted to green, is used as the second yellow ink. Hence, when a θ value (Bluish Cyan value) of the first cyan ink in the color coordinate system is in the range of 230° to 245°, at least one kind of ink, which has a θ value (Greenish yellow value) of 92° to 107°, is further included as the second yellow ink.

The magenta ink can produce blue together with an adjacent cyan ink. When the first magenta ink is shifted from the standard color region in a red direction, the color gamut of blue is decreased. As a result, in order to compensate for the decrease of the color gamut of blue, a cyan ink, which is shifted to blue, is used as the second cyan ink. That is, when a θ value (Reddish Magenta value) of the first magenta ink in the color coordinate system is in the range of 5.3° to 20.3°, at least one kind of ink which has a θ value (Bluish Cyan value) of 230° to 245°, is further included as the second cyan ink.

The magenta ink can also produce red together with an adjacent Yellow ink. When the first magenta ink is shifted from the standard color region in a blue direction, the color gamut of red is decreased. As a result, in order to compensate for the decrease of the color gamut of red, a yellow ink, which is shifted to red, is used as the second yellow ink. That is, when a θ value (Bluish Magenta value) of the first magenta ink in the color coordinate system is in the range of 340.3° to 355.3°, at least one kind of ink, which has a θ value (Reddish yellow value) of 67° to 82°, is further included as the second cyan ink.

The yellow ink can produce green together with an adjacent cyan ink. When the first yellow ink is shifted from the standard color region in a red direction, the color gamut of green is decreased. As a result, in order to compensate for the decrease the color gamut of green, a cyan ink, which is shifted to green, is used as the second cyan ink. That is, when a θ value (Reddish yellow value) of the first yellow ink in the color coordinate system is in the range of 67° to 82°, at least one kind of ink which has a θ value (Greenish Cyan value) of 205° to 220° is further included as the second cyan ink.

The yellow ink can also produce red together with an adjacent magenta ink. When the first yellow ink is shifted from the standard color region in a green direction, the color gamut of red is decreased. As a result, in order to compensate for the decrease of the color gamut of red, a magenta ink, which is shifted to red, is used as a second magenta ink. That is, when a θ value (Greenish yellow value) of the first yellow ink in the color coordinate system is in the range of 92° to 107°, at least one kind of ink, which has a θ value (Reddish Magenta value) of 5.3° to 20.3°, is further included as the second magenta ink.

According to the number of inks selected from the group consisting of the first cyan ink, the first magenta ink, and the first yellow ink, which has the shifted color region, the method described above can be repeatedly used, so that the ink set may further include at least one kind of ink selected from the group consisting of the second cyan ink, the second magenta ink, and the second yellow ink.

In this case, a ratio of the concentration of a coloring agent of at least one kind of ink selected from the group consisting of the second cyan ink, the second magenta ink, and the second yellow ink to the concentration of a coloring agent of ink selected from the group consisting of the first cyan ink, the first magenta ink, and the first yellow ink, which is a complementary color of the selected second ink, is in the range of 1/10 to 1. When the ratio is lower than 1/10, the color gamut increase effect does not occur. On the other hand, when the ratio is greater than 1, a smooth illustration cannot be obtained.

Each of the second cyan ink, the second magenta ink, and the second yellow may include one kind of ink or at least two kinds of inks having different coordinates in the color coordinate system. A second ink must have a color region shifted in the same direction as a first ink having the shifted region in the color coordinate system.

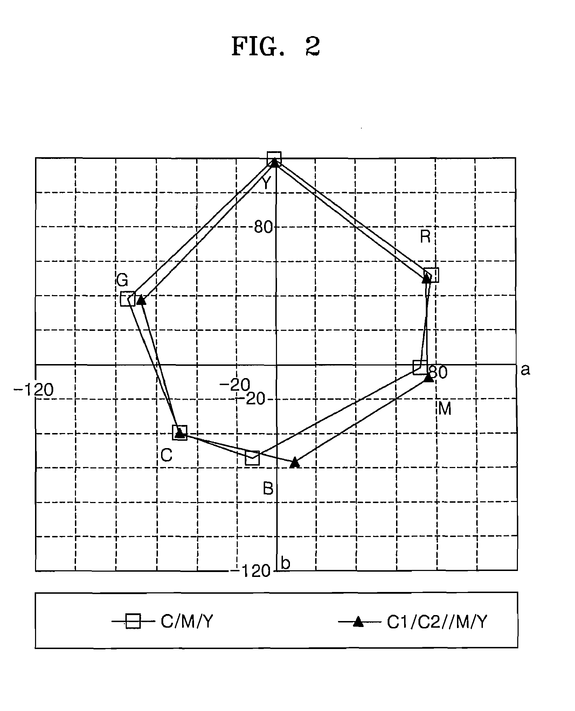

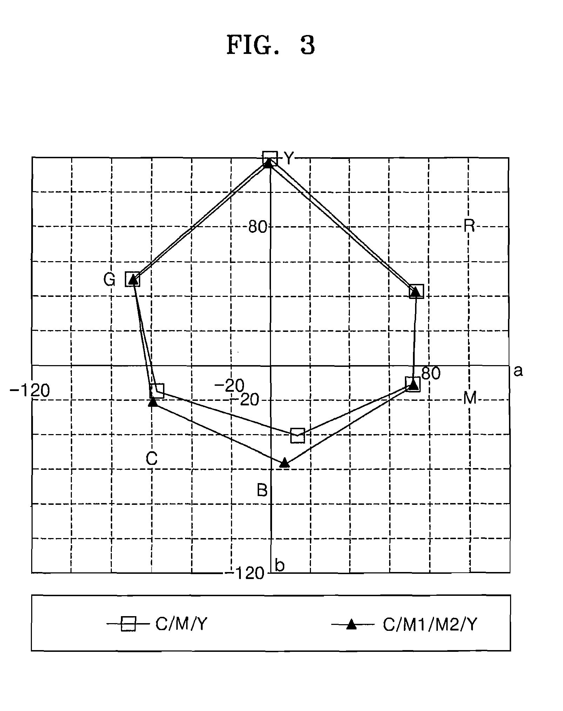

FIG. 2 and FIG. 3 are graphs illustrating a color gamut of an ink set according to embodiments of the present invention. FIG. 2 illustrates a case in which when a first magenta is shifted to red, and a cyan ink that is shifted to blue is used as a second Cyan. FIG. 3 illustrates a case in which when a first cyan is shifted to green, a magenta that is shifted to blue is used as a second magenta. As illustrated in FIGS. 2 and 3, when an ink set according to an embodiment of the present invention is used, a larger color gamut can be obtained as compared to a case in which a three-color ink set of cyan, magenta and yellow is used alone.

The ink set according to an embodiment of the present invention includes the first cyan ink, the first magenta ink, and the first yellow ink. Each of the first cyan ink, the first magenta ink, and the first yellow ink includes 0.1 to 10% of a coloring agent, 5 to 50% of an organic solvent, and 30 to 90% water. The coloring agent used can be any coloring agent such as a dye that is dissolved or dispersed in water, a pigment that is used together with a dispersing agent and stably dispersed in water, a self-dispersion pigment that is stably dispersed in water without a dispersing agent, or a mixture thereof.

The dye can be an anionic dye, such as an acidic dye, a direct dye, and a reactive dye. Examples of the dye include food black dyes, food red dyes, food yellow dyes, food blue dyes, acid black dyes, acid red dyes, acid blue dyes, acid yellow dyes, direct black dyes, direct blue dyes, direct yellow dyes, anthraquinone dyes, monoazo dyes, disazo dyes, trisazo dyes, polyazo dyes, and a metal complex dye of phthalocyanine derivative. Examples of the pigment include carbon black, graphite, vitreous carbon, activated charcoal, activated carbon, anthraquinone, phthalocyanine blue, phthalocyanine green, diazos, monoazos, pyranthrones, perylene, quinacridone, and indigoid pigments. Examples of the self-dispersion dye include cabojet-series and CW-series of Orient Chemical Co. However, the dye, the pigment, and the self-dispersion dye are not limited thereto.
The organic solvent of the ink can be a surfactant. The surfactant can be a C1-C1000 alkylcarboxylic acid salt, preferably C10-C200 alkylcarboxylic acid salt, a C1-C1000 alcohol sulfonic ester salt, preferably C10-C200 alcohol sulfonic ester salt, a C1-C1000 alkylsulfonic acid salt, preferably C10-C200 alkylsulfonic acid salt, a C1-C1000 alkylbenzenesulfonic acid salt, preferably C10-C200 alkylbenzenesulfonic acid salt, or a mixture thereof; a fatty acid amine salt, a quaternary ammonium salt, a sulfonium salt, a phosphonium salt, or a salt or mixture thereof; polyoxyethylene alkyl ether where the alkyl is a C1-C1000 alkyl, preferably a C10-C200 alkyl, polyoxyethylene alkyl phenyl ether where the alkyl is a C1-C1000 alkyl, preferably a C10-C200 alkyl, polyoxyethylene secondary alcohol ether, polyoxyethylene-oxypropylene block copolymer, polyglycerine fatty acid ester, sorbitan fatty acid ester, or a mixture thereof; acetylenic glycol, Tergitol, or the like. However, the present invention is not limited thereto.

The surfactant may be a non-ionic or ionic surfactant. Specifically, the surfactant can be Surfynol series (104, 440, 465, 485 & 485W etc.) of Air Product Co., Tergitol series (15-S-3, -5, -7, -9, -12, -15, -20, -30) of ICI Co., or Polysorbate series of ICI Co. However, the present invention is not limited thereto.

The ink according to an embodiment of the present invention may further include, when required, an additive, such as a wetting agent, a dispersing agent, a viscosity controlling agent, a pH controlling agent, or an antioxidant. The ink may further include a co-solvent to improve solubility and stability of the coloring agent. The co-solvent may include at least one compound selected from the group consisting of alcohols, glycols, polyols, ethers, and amides. Examples of the co-solvent include an alcohol-based compound, such as methylalcohol, ethyl alcohol, n-propylalcohol, isopropylalcohol, n-butylalcohol, sec-butylalcohol, t-butylalcohol, or isobutylalcohol; a polyhydric alcohol compound, such as 1,6-hexanediol, 1,2-hexanediol, ethylene glycol, diethyleneglycol, triethyleneglycol, propyleneglycol, butyleneglycol, 1,4-butanediol, 1,2,4-butanetriol, 1,5-pentandiol, 1,2,6-hexantriol, trimethanolpropane, hexyleneglycol, glycerol, or poly(ethylene glycol); ketones, such as acetone, methylethylketone, or diacetonealcohol; esters, such as ethylacetate, or ethyl lactate; a low alkyl ether, such as ethyleneglycol monomethyl ether, ethyleneglycol monoethyl ether, diethyleneglycol methyl ether, diethyleneglycol ethyl ether, diethyleneglycol monobutyl ether(diethylene glycol monobutyl ether), diethyleneglycol diethylene ether, triethyleneglycol monomethyl ether, or triethyleneglycol monoethyl ether; dimethyl sulfoxide; tetramethylenesulfone; thioglycol; or the like. However, alcohols, glycols, polyols, and ethers are not limited thereto.

Examples of amides include 2-pyrrolidone, 2-piperidone, N-methyl-pyrrolidone, caprolactam, tetrahydro-2-pyrimidone, 3-methyl-tetrahydro-2-pyrimidone, 2-imidazolidinone, dimethylimidazolidinone, diethylimidazolidinone, butyl urea, 1,3-dimethyl urea, ethyl urea, propyl urea, isopropyl urea, and 1,3-diethyl urea. However, the amides are not limited thereto.

The dispersing agent of the ink may improve a dispersing capability of a carbon black or a color pigment. The dispersing agent can be a water-soluble resin or any surfactant according to the kind of the pigment used. The water-soluble resin can be an alkali metal salt, ammonium salt, or amine salt of a polymer prepared by performing a polymerization process using a monomer selected from the group consisting of an unsaturated carboxylic acid, such as an acrylic acid, a methacrylic acid, a maleic acid, or a itaconic acid; an alkyl ester thereof; styrene; acrylonitrile; and a vinyl acetate. The water-soluble resin also can be an alkali metal salt, ammonium salt, or amine salt of a copolymer prepared by copolymerizing at least two monomers selected from the group consisting of an unsaturated carboxylic acid, such as an acrylic acid, a methacrylic acid, a maleic acid, or a itaconic acid; an alkyl ester thereof; styrene; acrylonitrile; and a vinyl acetate.

The present invention will be described in further detail with reference to the following examples. These examples are for illustrative purposes only and are not intended to limit the scope of the present invention.

A coloring agent and additives having the amounts as described in Table 1 were blended and then water was added thereto so that the total weight of the resultant solution was 100 g. The resultant solution was sufficiently mixed using a mixer for 30 minutes or more to obtain a homogeneous solution.

Then, the mixture was filtered through a 0.45 µm filter to prepare the ink. At this time, the coloring agent used was:

### <Cyan color coloring agent>

PB 15:4, Acid Blue 113: Cyan which is shifted to blue
Direct Blue 199: Cyan of a standard color region
Acid Blue 9: Cyan which is shifted to green

### <Magenta color coloring agent>

Acid Red 52, PR 122: Magenta which is shifted to blue
Reactive Red 180: Magenta of a standard color region
Direct Red 75, Reactive Red 24: Magenta which is shifted to red

### <Yellow color coloring agent>

PY 74, Acid Yellow 5: Yellow which is shifted to green
Acid Yellow 23: Yellow of a standard color region
Direct Yellow 86: Yellow which is shifted to red

**Table 1**

| No. | coloring agent | Additives |
|---|---|---|
| A | PB 15:4 5g | DEG 6g EG 10g Tween 20 0.2g |
| B | Acid Blue 113 4g | 1,5-PD 10g EG 6g CT-171 0.2g |
| C | Acid Blue 9 4g | 1,5-PD 10g EG 6g CT-171 0.2g |
| D | Acid Blue 113 0.7g | DEG 10g 2-Py 2g |
| E | Acid Blue 9 0.8g | DEG 8g EG 7g Tween 20 0.2g |
| F | Reactive Red 180 4g | 1,5-PD 10g EG 6g CT-171 0.2g |
| G | Direct Red 75 4.5g | 1,5-Pentanediol 7g caprolactam 3g |
| H | PR 122 3.6g | DEG 6g EG 10g Tween 20 0.2g |
| I | Acid Red 52 0.6g | DEG 10g 2-Py 2g |
| J | Direct Yellow 86 0.6g | 1,5-PD 10g EG 6g CT-171 0.2g |
| K | Acid Yellow 23 3.6g | DEG 6g EG 10g Tween 20 0.2g |
| L | PY 74 4.2g | 1,5-PD 10g EG 6g CT-171 0.2g |
| M | Direct Yellow 86 4g | 1,5-pentandiol 7g caprolactam 3g |
| N | Acid Yellow 5 2g | DEG 10g 2-Py 2g |
| O | Direct Yellow 86 1g | 1,5-PD 10g EG 6g CT-171 0.2g |
| P | Direct Blue 199 0.8g | DEG 6g EG 10g Tween 20 0.2g |
| Q | Reactive Red 180 0.7g | DEG 6g EG 10g Tween 20 0.2g |
| R | Acid Yellow 23 0.6g | DEG 6g EG 10g Tween 20 0.2g |
| S | Reactive Red 24 0.8g | DEG 6g EG 10g Tween 20 0.2g |

| | | |
|---|---|---|
| DEG : diethyleneglycol EG: ethyleneglycol 1,5-PD: 1,5-pentandiol CT-171: surfynol 2-Py: 2-pyrrolidone | | |

**Table 2**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| First Cyan ink | C | B | A | A | A | B | A |
| First Magenta ink | F | F | H | F | H | G | F |
| First Yellow ink | K | K | L | M | L | K | K |
| Second Cyan ink | - | D | P | P | http://itempage.auction.co.kr/DetailView. | | |
| Second Magenta ink | Q | Q | - | I | | | |
| Second Yellow ink | | | - | | | | |
| ΔE | 14238 | 14346 | 13813 | 14276 | 14381 | 13864 | 13934 |
| Test Results | 2.2% | 3.0% | -0.9% | 2.5% | 3.2% | -0.5% | Reference |

In Table 2, the test results were obtained by:
ΔE of each of the Examples and the Comparative Examples/ ΔE of Comparative Example 7 x 100, where ΔE= {(L-0)2 + (a-0)2 + (b-0)2}1/2.

**Table 3**

| | Example 1 | Example 2 | Example 3 | Example 4 | Example 5 | Example 6 |
|---|---|---|---|---|---|---|
| First Cyan ink | C | B | A | A | A | B |
| First Magenta ink | F | F | H | F | H | G |
| First Yellow ink | K | K | L | M | L | K |
| Second Cyan ink | - | D | P | D | E | E |
| Second Magenta ink | I | Q | - | I | S | |
| Second Yellow ink | | N | O | | | |
| ΔE | 15281 | 15478 | 15342 | 15581 | 15371 | 14765 |
| Test Results | 9.7% | 11.1% | 10.1% | 11.8% | 10.3% | 5.9% |

6 ml of the prepared ink was injected to a C-60 color cartridge of a Samsung MJC-3300p ink-jet printer and a P-50 photo cartridge. Then, using glossy paper and in a high quality mode, cyan, magenta, yellow, red, green, and blue were printed into a solid image, and then, a CIE-L*a*b* value was measured using GretagMacbeth Spectro-I. Then, a hexagonal region of the color coordinate system was evaluated and the reproducible color gamuts were compared.

Referring to Table 2 and Table 3, the ink sets prepared according to the Examples have a color gamut that is larger than ink sets prepared according to the Comparative Examples.

According the present invention, when at least one kind of ink has a shifted color region, an ink which is a complementary color of the ink having a shifted color region is controlled so that reproducible color gamut of red, green, and blue is increased. As a result, by obtaining various gradation expressions and excellent three-dimensional expressions, which have been obtained using a conventional method using light magenta and light cyan, the color gamuts of red, green, and blue can be increased without the use of additional cartridges. Therefore, if the skin of a person or a natural landscape including leaves is printed, a color reproduction region can be increased so that printed images are much realistic and clear.

In the context of the present invention, references to the at least one second ink being a "complementary color" of the selected first ink having a shifted color region should be understood to mean that the second ink is a complementary color to the shifted color of the selected first ink. Thus, if the selected first ink is a cyan ink that has a colour region shifted to green, the complementary colour to green is magenta and the selected second ink having a color region shifted in the same direction as the selected first ink is a magenta ink shifted to blue. Conversely, if the selected first ink is a cyan ink that has a colour region shifted to blue, the complementary colour to blue is yellow and the selected second ink having a color region shifted in the same direction as the selected first ink is a yellow ink shifted to green.

While the present invention has been particularly shown and described with reference to exemplary embodiments thereof, it will be understood by one of ordinary skill in the art that various changes in form and details may be made therein without departing from the spirit and scope of the present invention as defined by the following claims.

## Claims

1. An ink set comprising a first cyan ink, a first magenta ink, and a first yellow ink, wherein at least one of said first inks selected from the group consisting of the first cyan ink, the first magenta ink, and the first yellow ink has a color region shifted from a standard color region in a color coordinate system, the ink set further comprising:
at least one second ink selected from the group consisting of a second cyan ink, a second magenta ink, and a second yellow ink, which is a complementary color of the selected first ink having the shifted color region, and where the second ink has a color region shifted from the standard color region of the selected second ink in the same direction as the selected first ink having the shifted color region.

2. The ink set of claim 1, when the first cyan ink has a θ value (Greenish Cyan value) of 205° to 220° in the color coordinate system, further comprising at least one kind of ink having a θ value (Bluish Magenta value) of 340.3° to 355.3° as the second magenta ink, where θ denotes an angle between a straight line connecting a coordinate of (0,0) of a*b* coordinates to a plotted point and an a* plus axis in a counter-clockwise direction in a Lab color coordinate system.

3. The ink set of claim 1, when the first cyan ink has a θ value (Bluish Cyan value) of 230° to 245° in the color coordinate system, further comprising at least one kind of ink having a θ value (Greenish Yellow value) of 92° to 107° as the second yellow ink, where θ denotes an angle between a straight line connecting a coordinate (0,0) of a*b* coordinates to a plotted point and an a* plus axis in a counter-clockwise direction in a Lab color coordinate system.

4. The ink set of claim 1, when the first magenta ink has a θ value (Bluish Magenta value) of 340.3° to 355.3° in the color coordinate system, further comprising at least one kind of ink having a θ value (Reddish Yellow value) of 67° to 82° as the second yellow ink, where θ denotes an angle between a straight line connecting a coordinate (0,0) of a*b* coordinates to a plotted point and an a* plus axis in a counter-clockwise direction in a Lab color coordinate system.

5. The ink set of claim 1, when the first magenta ink has a θ value (Reddish Magenta value) of 5.3° to 20.3° in the color coordinate system, further comprising at least one kind of ink having a θ value (Bluish Cyan value) of 230° to 245° as the second cyan ink, where θ denotes an angle between a straight line connecting a coordinate (0,0) of a*b* coordinates to a plotted point and an a* plus axis in a counter-clockwise direction in a Lab color coordinate system.

6. The ink set of claim 1, wherein when the first yellow ink has a θ value (Greenish yellow value) of 92° to 107° in the color coordinate system, further comprising at least one kind of ink having a θ value (Reddish Magenta value) of 5.3° to 20.3° as the second magenta ink, where θ denotes an angle between a straight line connecting a coordinate (0,0) of a*b* coordinates to a plotted point and an a* plus axis in a counter-clockwise direction in a Lab color coordinate system.

7. The ink set of claim 1, wherein the first yellow ink has a θ value (Reddish yellow value) of 67° to 82° in the color coordinate system, further comprising at least one kind of ink having a θ value (Greenish Cyan value) of 205° to 220° as the second cyan ink, where θ denotes an angle between a straight line connecting a coordinate (0,0) of a*b* coordinates to a plotted point and an a* plus axis in a counter-clockwise direction in a Lab color coordinate system.

8. The ink set of claim 1, wherein a ratio of the concentration of a coloring agent of the at least one kind of ink selected from the group consisting of the second cyan ink, the second magenta ink, and the second yellow ink to the concentration of a coloring agent of the at least one kind of ink selected from the group consisting of the first cyan ink, the first magenta ink and the first yellow ink, which is a complementary color of the at least one kind of ink selected from the group consisting of the second cyan ink, the second magenta ink, and the second yellow ink, is in the range of 1 / 10 to 1.

9. An ink set comprising a first cyan ink, a first magenta ink, and a first yellow ink, wherein at least one of said first inks selected from the group consisting of the first cyan ink, the first magenta ink, and the first yellow ink has a color region shifted from a standard color region in a color coordinate system, the ink set further comprising:
at least one second ink selected from the group consisting of a second cyan ink, a second magenta ink, and a second yellow ink, which is a complementary color to the shifted colour region of the selected first ink, and where the second ink has a color region shifted from the standard color region of the selected second ink in the same direction in the color coordinate system as the selected first ink having the shifted color region.

10. An ink set as claimed in claim 9, wherein the selected second ink has a shifted color region that compensates for the deviation from the standard color region of the shifted color region of the first selected ink.

11. Apparatus comprising an ink set as claimed in any one of claims 1 to 10.

12. A method of improving the colour gamut of an ink set comprising a first ink having a color region shifted region in a color coordinate system with respect to a standard color, said method comprising including in the ink set a second ink that is a complementary color to the shifted color region of the first ink and that has a color region shifted from the standard color region of the second ink in the same direction in the color coordinate system as the first ink having the shifted color region.
